# EUROPÄISCHE PATENTANMELDUNG

(11) **EP 2 058 655 A2**
(43) Veröffentlichungstag der Anmeldung: **13.05.2009**
(21) Anmeldenummer: 08018438.5
(22) Anmeldetag: 22.10.2008
(51) Int. Cl.: G01N 27/82

(54) **Vorrichtung zur Überwachung von Tragseilen**

(30) Priorität: 07.11.2007 DE 102007053447; 11.12.2007 DE 102007059836
(71) Anmelder: OSMA-Aufzüge Albert Schenk GmbH & Co.KG, 49084 Osnabrück (DE)
(72) Erfinder: Rinn, Klaus-Dieter, 49545 Tecklenburg (DE)
(74) Vertreter: Busse & Busse Patentanwälte

(57) **Zusammenfassung**

Die vorliegende Erfindung umfaßt eine Vorrichtung (2) zur Messung von Tragseilen (12). Um eine Vorrichtung zu schaffen, die bei einem vertretbaren Herstellungsaufwand eine Messung auf lokale Defekte bei einer hohen Auflösung und Verlässlichkeit der Messsignale bietet, wird vorgeschlagen, dass die Vorrichtung (2) eine Spulenanordnung (6) mit einer Primärspule und einer Sekundärspule, zwischen denen eines oder mehrere zu messende Tragseile (12) positionierbar sind, einen Wandler, mit dem die Messfrequenz in eine sinusförmige Spannung wandelbar ist, einen ersten Operationsverstärker (10), mit dem die Primär-Sinusspannung leistungsmäßig verstärkbar und einem Messkanal zuführbar ist, einen zweiten Operationsverstärker (10), mit welchem die induzierte Sekundärspannung verstärkbar, gleichrichtbar und einem A/D-Wandler eines Mikroprozessors (14) zuführbar ist, und eine Spannungsversorgung (16), die System-Einzelspannungen erzeugt, aufweist.

## Beschreibung

Die vorliegende Erfindung bezieht sich auf eine Vorrichtung zur Messung von Tragseilen.

Aus dem Stand der Technik ist es bekannt, durch magnetische zerstörungsfreie Verfahren und Prüfvorrichtungen lokale Defekte und Metallflächenverluste in Gegenständen zu messen. Ein Beispiel hierfür findet sich in der Schrift DE 100 26 313. Es ist weiter bekannt, um ein Stahlseil für Seilbahnen oder Aufzüge eine Erregerspule zu legen, um von Kabeldefekten verursachte Veränderungen im magnetischen Fluss mittels einer Messspule zu erfassen und aus daraus induzierten Spannungen auswertbare Signale abzuleiten. Ein Beispiel hierfür findet sich in der Schrift DE 44 13 924. Diese Messprinzipien beruhen jedoch auf einem Messprinzip, das eine Vormagnetisierung bis hin zur magnetischen Sättigung der zu untersuchenden Gegenstände voraussetzt. Dies verursacht einen erheblichen Aufwand, und die aus der Überwachung der Magnetisierung abgeleiteten Signale verfügen über eine vergleichsweise schwache Auflösung. Zudem kann sich auf Dauer die Magnetisierung der Gegenstände verändern, was zu Verfälschungen der gemessenen Signale führen kann.

Aus der Schrift WO 2006/058862 ist es bekannt, für die Überwachung eines Durchflussmengenmessgerätes einen Magnetfeldgenerator zu verwenden, bei dem mittels zweier Spulen ein das Messrohr durchsetzendes Magnetfeld erzeugt wird. Die Überwachungsvorrichtung mit einer Spule als Erzeuger und einer weiteren Spule als Empfänger eines Magnetfeldes setzt jedoch die Anbindung an eine magnetisch-induktive Messvorrichtung voraus, deren Funktion überwacht wird. Bei der magnetisch-induktiven Messvorrichtung sind die Elektroden mit dem zu messenden Medium entweder kapazitiv oder galvanisch gekoppelt. Bei der magnetisch-induktiven Messung können jedoch Störungen auftreten, und die Kombination der magnetisch-induktiven Messmethode mit einer zusätzlichen magnetfeldgestützten Überwachungsvorrichtung ist aufwendig.

Demgemäß ist es die Aufgabe der vorliegenden Erfindung, eine Vorrichtung zu schaffen, die bei einem vertretbaren Herstellungsaufwand eine Messung auf lokale Defekte bei einer hohen Auflösung und Verlässlichkeit der Messsignale bietet.

Die Aufgabe wird für eine gattungsgemäße Vorrichtung gelöst, indem die Vorrichtung eine Spulenanordnung mit einer Primärspule und einer Sekundärspule, zwischen denen ein oder mehrere zu messende Tragseile positionierbar sind, einen Wandler, mit dem die Messfrequenz in eine sinusförmige Spannung wandelbar ist, einen ersten Operationsverstärker, mit dem die Primär-Sinusspannung leistungsmäßig verstärkbar und einem Messkanal zuführbar ist, einen zweiten Operationsverstärker, mit welchem die induzierte Sekundärspannung verstärkbar, gleichrichtbar und einem A/D-Wandler eines Mikroprozessors zuführbar ist, und eine Spannungsversorgung, die System-Einzelspannungen erzeugt, aufweist.

Bei der erfindungsgemäßen Vorrichtung wird die Permeabilität von ferromagnetischen Tragseilen genutzt, um in der Spulenanordnung mit einer Mittel- oder Hochfrequenz eine Wechselspannung zu induzieren, deren Spannungshöhe auswertbar ist. Die magnetische Permeabilität oder auch magnetische Leitfähigkeit bestimmt die Durchlässigkeit von Materie für magnetische Felder. Anders ausgedrückt ist die Permeabilität das Verhältnis der magnetischen Flussdichte zur magnetischen Feldstärke. Ferromagnetische Materialien besitzen eine sehr große Permeabilität, die aber abhängig vom äußeren Magnetfeld ist, da durch Ausrichten der so genannten Elementarmagnete im Material eine Verstärkung des äußeren Feldes erzielt wird. Unabhängig davon, ob das zu messende Tragseil vormagnetisiert ist oder nicht, verändert sich die Permeabilität des Tragseils in einem gewissen Maß, wenn darin beispielsweise Litzenbrüche auftreten oder sich der Seilquerschnitt verschleißbedingt ändert.

Von größerer Bedeutung für die Erzeugung eines auswertbaren Messsignals ist jedoch die Änderung der gegenseitigen Induktion der Primärspule und der Sekundärspule durch Veränderungen im Tragseil, beispielsweise durch Durchmesserveränderungen oder einen Litzenbruch. Wird der Spulendraht wegen der anliegenden mittelbis hochfrequenten Wechselspannung von einem sich zeitlich ändernden Strom durchflossen, so entsteht um den elektrischen Leiter ein sich zeitlich ändernder magnetischer Fluss. Jede Änderung des Stromes erzeugt an den Enden des elektrischen Leiters eine Selbstinduktionsspannung. Diese Spannung ist dabei so gerichtet, dass sie ihrer Ursache entgegen wirkt. Eine Zunahme der Änderungsrate des Stromes führt zur Erhöhung der Spannung, die dem Strom entgegen wirkt. Der Proportionalitätsfaktor zwischen sich zeitlich änderndem Strom durch den Leiter und der dabei entstehenden Selbstinduktionsspannung wird als Induktivität bezeichnet. Da sich die Induktion der Primär- und der Sekundärspule gegenseitig beeinflusst, können auch kleine von ferromagnetischen Materialien herrührende Veränderungen im Spannungsfeld zwischen der Primär- und der Sekundärspule als eine Veränderung der Spannungshöhe erkannt werden. Das Messprinzip basiert also auf der gegenseitigen Induktion der beiden Spulen mit Feldstärken im Bereich der Kleinsignal-Permeabilität mit Strömen in der Größenordnung von Milliampere und Frequenzen im Bereich von 10 kHz bis 20 kHz. Die Auswertung der Veränderung in der Permeabilitätskurve abhängig von der Feldstärke H und der von der Spule abhängigen Materialkonstanten µᵣ ergibt im Kleinsignal der Feldstärke einen auswertbaren Messwert.

Durch die erfindungsgemäße Verstärkung der Primär-Sinusspannung und der induzierten Sekundärspannung durch die Operationsverstärker können auch solche Materialveränderungen von der Vorrichtung gemessen werden, die von den herkömmlichen Vorrichtungen nicht erkennbar sind.

Durch die Umwandlung der Rechteck-Messfrequenz in eine sinusförmige Spannung mittels des Wandlers wird ein auswertbares Messsignal generiert, das eine geringe Störanfälligkeit aufweist.

Durch die Gleichrichtung und Zuführung der Sekundärspannung an einen A/D-Wandler eines Mikroprozessors ist eine Bewertung der gemessenen Spannungshöhen möglich. Die Bewertung kann rechnerisch anhand von Daten erfolgen, die in einem Speicher hinterlegt sind, oder durch einen Vergleich mit anderen aktuell gemessenen Spannungshöhen. Über den Mikroprozessor können die gemessenen Daten auch für Dokumentations- und Wartungszwecke abgespeichert oder an andere nachgeordnete Überwachungsstationen übermittelt werden, beispielsweise an einen Servicedienst, an den Hersteller oder an eine Steuerung der Vorrichtung, in dem das Tragseil eingesetzt wird, wie beispielsweise eine Aufzugssteuerung, eine Seilbahn oder dergleichen, um beispielsweise Lasten zu begrenzen, die Vorrichtung still zu setzen oder dergleichen.

Durch die Spannungsversorgung, die System-Einzelspannungen erzeugt, ist es möglich, die jeweils erzeugten Spannungen an das jeweilige System bedarfsgerecht anzupassen. Die Spannungsversorgung kann aus einer Netzspannung oder einer Niedervolt-Gleichspannung erzeugt werden. Es ist insbesondere möglich, eine Versorgungsspannung für die Prozessorumgebung und die Operationsverstärker der Sekundärspannungen bereitzustellen, die getrennt ist von der Versorgungsspannung für die Operationsverstärker der Primärspannungen und den prozessorgeführten Regelkreis, um eine gegenseitige Beeinflussung und Abhängigkeit nach Möglichkeit zu verringern oder auszuschließen. Es ist außerdem möglich, für die Daten-Schnittstellen eine eigene Versorgungsspannung vorzusehen, um auch hier eine Abhängigkeit und Beeinflussung durch andere Versorgungsspannungen zu verringern oder auszuschließen. Schließlich ist es möglich, die jeweiligen Versorgungsspannungen zusätzlich zu stabilisieren, beispielsweise gegen Spannungsschwankungen im Versorgungsnetz, um die Prozesssicherheit und die Qualität der gemessenen Daten zu erhöhen.

Nach einer Ausgestaltung der Erfindung sind die Primärspule und/oder die Sekundärspule als Spulenleiterplatte ausgebildet, insbesondere mehrlagig. Durch die plattenförmige Gestaltung der Spule kann einerseits in der Plattenebene eine Vielzahl von Windungen des Spulenkörpers untergebracht werden, so dass von der Spule ein starker magnetischer Fluss erzeugbar ist, andererseits benötigt die Vorrichtung insgesamt nur einen geringen Bauraum, da die plattenförmige Gestalt eine Positionierung entlang der Längserstreckung des zu messenden Tragseils erlaubt. Die Spulenleiterplatten sind so flach, dass es insbesondere möglich ist, diese zwischen dicht nebeneinander liegende Tragseile zu schieben, so dass von einer erfindungsgemäßen Vorrichtung gleichzeitig mehrere nebeneinander angeordnete Tragseile zu überwachen vermag. Wenn die Spulenleiterplatten steckbar ausgeführt sind, können sie leicht montiert und bei Funktionsfehlern oder Schäden leicht ausgetauscht werden.

Nach einer Ausgestaltung der Erfindung weist die Vorrichtung einen Regelkreis zur Spannungs- und Temperaturkompensation auf. Durch den Regelkreis ist es möglich, Spannungs- oder Temperaturschwankungen, die eine Auswirkung auf die Messwerte haben könnten, auszugleichen. Der Regelkreis kann einen Messkanal der Vorrichtung aufweisen, der mittels einer Spulenanordnung ein Probestück eines Tragseils misst. Der vom Probestück des Tragseils ermittelte Messwert kann als Referenzwert für die Auswertung des Messwertes für das eigentlich zu messende Tragseil dienen. Die vom Messkanal ermittelten Messwerte können auch dazu genutzt werden, die Amplitude der für die Messungen bereit gestellten Sinusspannung zu stabilisieren.

Nach einer weiteren Ausgestaltung der Erfindung weist die Vorrichtung mehrere Spulenanordnungen mit je einer Primärspule und einer Sekundärspule auf. Hierdurch ist es möglich, mit einer Vorrichtung gleichzeitig mehrere Tragseile gleichzeitig zu überwachen. Es ist möglich, die Spulenanordnungen nebeneinander anzuordnen, um die Vorrichtung nach einem Baukastenprinzip auf eine gewünschte Anzahl von Spulenanordnungen aufzurüsten.

Nach einer weiteren Ausgestaltung der Erfindung ist es möglich, dass die Vorrichtung eine Grundplatte mit einer Anzahl von Stecksockeln aufweist, in die die Primärspulen und/oder die Sekundärspulen der Spulenanordnungen einsteckbar sind. Auf diese Weise kann eine standardisierte Grundplatte verwendet werden, die nur durch das Einstecken einer entsprechenden Anzahl von Spulenanordnungen an eine gewünschte Zahl von zu überwachenden Tragseilen anpassbar ist. Sollen weniger Tragseile überwacht werden, als es die maximale Zahl von Stecksockeln erlaubt, bleiben die nicht benötigten Stecksockel frei. Durch enge Abstände zwischen den Sockeln ist es möglich, die Vorrichtung an unterschiedliche Dicken von Tragseilen anzupassen, indem beispielsweise bei dickeren Tragseilen nur jeder zweite oder dritte Stecksockel bestückt wird. Die Grundplatte kann als eine Trägerplatine ausgestaltet sein. Es ist zusätzlich möglich, dass mit der Grundplatte ein Mikroprozessor, die Spannungsversorgung, der Regelkreis und/oder einer oder mehrere Operationsverstärker verbunden sind. Bei einer solchen Ausgestaltung kann die Vorrichtung aus wenigen Grundkomponenten auf einer einzigen Grundplatte aufgebaut werden. Dadurch wird eine kompakte Bauform mit wenigen definierten Schnittstellen und entsprechend wenigen Fehlermöglichkeiten bei der Montage und Funktion geschaffen.

Nach einer weiteren Ausgestaltung der Erfindung sind der Wandler, der Operationsverstärker zur Verstärkung der Primär-Sinusspannung, der Regelkreis, die Versorgungsspannung für die Prozessorumgebung und die Operationsverstärker der Sekundärspannungen und/oder die Versorgungsspannung für die Daten-Schnittstellen galvanisch getrennt ausgebildet. Durch die galvanische Trennung wird die gegenseitige Beeinflussbarkeit verringert und die Qualität der Messwerte verbessert.

Nach einer weiteren Ausgestaltung der Erfindung sind der Mikroprozessor und die Prozessorperipherie auf einer eigenen Prozessorplatine angeordnet, die mit der Grundplatte verbindbar ist. Diese Lösung ist montage- und wartungsfreundlich. Mit der Prozessorplatine kann zusätzlich das Schalt-Netzteil verbunden sein.

Schließlich ist nach einer Ausgestaltung der Erfindung vorgesehen, dass die Vorrichtung mit einem Gehäuse mit Schirmfunktion gegen Störstrahlung und Schutzfunktion vor elektromagnetischen Störungen versehen ist. Dadurch wird die Betriebssicherheit der Vorrichtung erhöht.

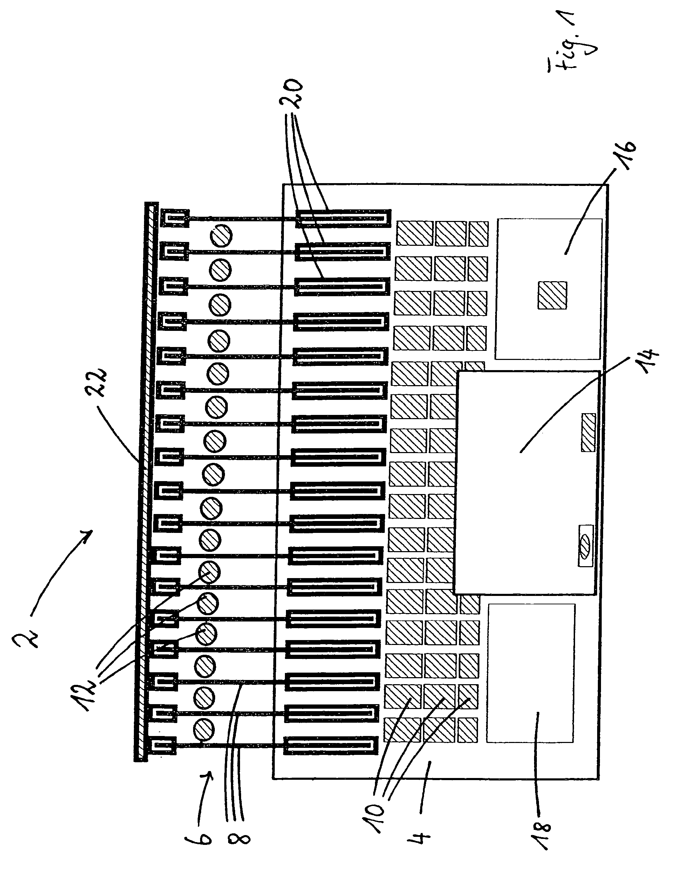

Weitere Abwandlungen und Ausgestaltungen der Erfindung lassen sich der nachfolgenden gegenständlichen Beschreibung, der Zeichnung und den Merkmalen der Unteransprüche entnehmen.

Die Erfindung soll nun anhand eines Ausführungsbeispiels näher erläutert werden. In der beigefügten Figur ist eine beispielhafte Ausführung einer Vorrichtung 2 gezeigt.

Die Vorrichtung 2 verfügt über eine Grundplatte 4, an die mehrere Spulenanordnungen 6 angeschlossen sind. Die Primärspulen und Sekundärspulen sind in Spulenleiterplatten 8 enthalten. Die Spulenleiterplatten 8 sind so angeordnet, dass zwischen ihnen jeweils ein Freiraum 9 bleibt, durch den ein zu messendes Tragseil 12 hindurchführbar ist. Der Freiraum 9 befindet sich im Bereich einer gedachten Verbindungslinie zwischen zwei benachbarten Spulenleiterplatten 8. Die Vorrichtung 8 kann ortsfest montiert sein, dann können die Tragseile 12 gemessen werden, wenn sie durch den Freiraum 9 hindurch laufen, beispielsweise bei der Bewegung einer Aufzugskabine mittels der zu messenden Tragseile 12.

Die Vorrichtung 8 kann jedoch auch mobil angeordnet sein, beispielsweise auf einer Aufzugskabine oder als bewegliche Prüfvorrichtung für Wartungstechniker. Dann ist es erforderlich, die Vorrichtung 2 an den Tragseilen 12 entlang zu führen, um die Tragseile 12 über ihre Länge hinweg messen zu können.

Um bei Wartungsarbeiten die fehlerhafte Stelle und/oder das fehlerhafte Tragseil 12 besser auffinden zu können, ist es möglich, die Vorrichtung 2 mit einer optischen Anzeige auszustatten, auf der das jeweils als schadhaft erkannte Tragseil 12 beziehungsweise die Fehlerstelle ablesbar ist. Die optische Anzeige kann beispielsweise aus einem LCD- oder LED-Display, einer Lampe oder dergleichen bestehen. Es kann für jeden Messkanal eine optische Anzeige, wie beispielsweise mindestens eine Leuchte oder eine farblich umschaltbare Diode vorgesehen sein, und/oder es handelt sich um eine oder mehrere optische Anzeigen, die jeweils zur Anzeige von Messwerten in Zahlen und/oder Buchstaben für eine oder mehrere Messkanäle vorgesehen sind. Die optische Anzeige kann zusätzlich oder alternativ Messwerte anzeigen, wie beispielsweise die gemessene Seildicke als absolute Werte, und/oder es werden relative Messwerte angezeigt, wie beispielsweise die Farben grün/gelb/rot, beispielsweise für einen neuwertigen, verschleißbehafteten und kritischen Zustand der Tragseile 12. Die optische Anzeige kann automatisch geschaltet sein oder durch Betätigung eines Bedienknopfes aktiviert werden.

Im Ausführungsbeispiel finden sich 17 Spulenleiterplatten 8, die zwischen sich insgesamt 16 Freiräume 9 begrenzen, durch die 16 Tragseile hindurchführbar sind. Mit der beispielhaft dargestellten Grundplatte können also bis zu 16 Tragseile 12 einzeln gemessen und überwacht werden. Durch jeweils einen Freiraum 9 können auch mehr als ein Tragseil 12 hindurchgeführt werden, in diesem Fall können dann mehr als 16 Tragseile mit der Grundplatte 4 gemessen und überwacht werden.

Die flachen Spulenleiterplatten 8 sind mit ihrer Plattenebene zumindest annähernd parallel zur Längserstreckung der Tragseile 12 orientiert, so dass sich eine kompakte Bauweise ergibt. Die Tragseile 12 laufen in einem geringen Abstand parallel zueinander. Die Spulenleiterplatten 8 reichen jeweils durch den Zwischenraum zwischen zwei benachbarten Tragseilen 12 hindurch. Die Spulen in einer Spulenleiterplatte 8 sind bevorzugt so angeordnet, dass sich das von einer Primärspule erzeugte Magnetfeld quer durch den Freiraum 9 und damit auch quer durch den Querschnitt eines durch diesen Freiraum hindurch geführten Tragseils 12 erstreckt. Auf der von einer Primärspule gegenüberliegenden Seite eines Freiraums 9 befindet sich eine Sekundärspule, bis zu der das von der Primärspule erzeugte Magnetfeld reicht. Durch die mittel- bis hochfrequente Wechselspannung wird in der Sekundärspule ein zweites Magnetfeld erzeugt, das über die Induktion auf das Magnetfeld der Primärspule einwirkt und dieses beeinflusst. Die Wechselwirkung zwischen den Magnetfeldern der Primär- und Sekundärspule erfolgt insbesondere im Bereich des Freiraums 9, durch den das zu messende Tragseil 12 hindurch geführt ist. Ist der Querschnitt des Tragseils 12 verändert, oder befinden sich im Tragseil 12 an einer Stelle Litzenbrüche, verändert sich die messbare Spannungshöhe der Wechselspannung. Dadurch sind Veränderungen des Tragseils 12 messbar und erkennbar.

Auf einer Spulenleiterplatte 8 können mehrere Spulen in paralleler Lage nebeneinander angeordnet sein. Im Ausführungsbeispiel sind auf einer Spulenleiterplatte 8 vier Spulen angeordnet. Die einzelnen Spulen einer solchen Spulenleiterplatte 8 können so beschaltet sein, dass beispielsweise zwei Spulen zusammen eine Primärspule und die weiteren beiden Spulen zusammen eine Sekundärspule ergeben. Andere Beschaltungen sind möglich.

Wenn von der Vorrichtung 2 weniger als 16 Tragseile 12 gemessen werden sollen, können entsprechend weniger Spulenleiterplatten 8 in die Vorrichtung 2 eingebaut werden.

Im Ausführungsbeispiel ist einer der Freiräume 9 mit einem Musterstück eines Tragseils 12 bestückt. Der von dem Musterstück mit einer Spulenanordnung 6 ermittelte Messwert kann als Referenzwert für die Messung der anderen Tragseile 12 genutzt werden.

Auf der Grundplatte 4 befinden sich eine Anzahl von Operationsverstärkern 10. Die Operationsverstärker 10 dienen dazu, entweder die Primär-Sinusspannung leistungsmäßig zu verstärken und dem jeweiligen einzelnen zugehörigen Messkanal zuzuführen oder die induzierten Sekundärspannungen zu verstärken gleichzurichten und dem A/D-Wandler des Mikroprozessors 14 zuzuführen. Im Ausführungsbeispiel befinden sich für 16 Messkanäle insgesamt 16 Sätze von Operationsverstärkern 10 auf der Grundplatte 4.

Mit dem Mikroprozessor 14 ist es möglich, die Spannungssignale weiter zu verarbeiten. Die Weiterverarbeitung kann in einer bloßen Speicherung der Messwerte in einem Speicher bestehen, der Mikroprozessor 14 kann jedoch zusätzlich oder alternativ die Messwerte mit vorgegebenen Grenzwerten vergleichen und bei Über- bzw. Unterschreitungen einen Alarm auslösen, oder der Mikroprozessor 14 übermittelt die Messwerte an eine übergeordnete Steuerung, beispielsweise einer Aufzugsanlage, oder an den Hersteller oder einen Wartungsbetrieb, von wo aus Reparatur- und Wartungsarbeiten ausgelöst werden können.

Die Vorrichtung 2 verfügt auch über eine Spannungsversorgung 16. Die Spannungsversorgung kann den Mikroprozessor 14 einschließlich seiner Peripherie, die Operationsverstärker 10 sowie die diesen nachgeordneten Spulenleiterplatten 8, die Datenschnittstellen und/oder einen Regelkreis 18 mit Strom versorgen. Dabei ist es vorteilhaft, die Spannungsversorgung 16 so zu organisieren, dass sich Spannungs- und Netzschwankungen nicht nachteilig auf die Messqualität in den einzelnen Versorgungsnetzen auswirken.

Der separate Regelkreis 18 dient dazu, Spannungs- und Temperaturschwankungen zu kompensieren. Der Regelkreis 18 kann insbesondere an den Messkanal angeschlossen sein, in dem das Musterstück eines Tragseils 12 messbar ist.

Auf der Grundplatte 4 befinden sich eine Anzahl von Stecksockeln 20, in die die Spulenleiterplatten 8 einsteckbar sind. Die Stecksockel 20 erleichtern die Montage und Wartung der Vorrichtung 2. Im Ausführungsbeispiel sind die Spulenleiterplatten 8 auf ihrer der Grundplatte 4 abgewandeten Seite zusätzlich von einer Spulenabschlußleiterplatte 22 gehalten, die ebenfalls im Ausführungsbeispiel mit Stecksockeln 20 versehen ist.

Die beispielhafte Vorrichtung 2 ist dazu geeignet, mit einer Messfolge im Abstand von 2 mm auf dem Tragseil 12 bei einer Seilgeschwindigkeit von 2 m/s Messungen vorzunehmen. Mit der Vorrichtung 2 ist eine Messgenauigkeit von 1 % des Querschnitts des zu messenden Tragseils 12 erzielbar. Die Messwerte können dazu genutzt werden, um den Zeitpunkt für den Austausch der Tragseile 12 vorher zu bestimmen oder um Wartungspersonal Hinweise auf Schadstellen in einem Tragseil zu geben.

Die vorstehende gegenständliche Beschreibung dient nur der beispielhaften Beschreibung der Erfindung. Dem Fachmann bereitet es keine Schwierigkeiten, die beschriebene Vorrichtung auf eine ihm geeignet erscheinende Weise auf einen konkreten Anwendungsfall hin anzupassen. Dabei kann er einzelne Bestandteile der Vorrichtung auf eine beliebige Weise miteinander kombinieren, indem bestimmte Elemente weggelassen und andere Elemente hinzugefügt werden.

## Patentansprüche

1. Vorrichtung (2) zur Messung von Tragseilen (12), **dadurch gekennzeichnet, dass** die Vorrichtung (2) eine Spulenanordnung (6) mit einer Primärspule und einer Sekundärspule, zwischen denen eines oder mehrere zu messende Tragseile (12) positionierbar sind, einen Wandler, mit dem die Messfrequenz in eine sinusförmige Spannung wandelbar ist, einen ersten Operationsverstärker (10), mit dem die Primär-Sinusspannung leistungsmäßig verstärkbar und einem Messkanal zuführbar ist, einen zweiten Operationsverstärker (10), mit welchem die induzierte Sekundärspannung verstärkbar, gleichrichtbar und einem A/D-Wandler eines Mikroprozessors (14) zuführbar ist, und eine Spannungsversorgung (16), die System-Einzelspannungen erzeugt, aufweist.

2. Vorrichtung (2) nach Anspruch 1, **dadurch gekennzeichnet, dass** die dem Mikroprozessor (14) zugeleiteten Werte der Sekundärspannung von diesem speicherbar und/oder vergleichbar mit anderen Daten ist.

3. Vorrichtung (2) nach Anspruch 1 oder 2, **dadurch gekennzeichnet, dass** die Primärspule und/oder die Sekundärspule als Spulenleiterplatte (8), insbesondere mehrlagig, ausgebildet sind.

4. Vorrichtung (2) nach einem der vorhergehenden Ansprüche, **dadurch gekennzeichnet, dass** die Vorrichtung (2) einen Regelkreis (18) zur Spannungs- und Temperaturkompensation aufweist.

5. Vorrichtung (2) nach einem der vorhergehenden Ansprüche, **dadurch gekennzeichnet, dass** die Vorrichtung (2) mehrere Spulenanordnungen (6) mit je einer Primärspule und einer Sekundärspule aufweist.

6. Vorrichtung (2) nach Anspruch 5, **dadurch gekennzeichnet, dass** die Spulenanordnungen (6) nebeneinander angeordnet sind.

7. Vorrichtung (2) nach einem der Ansprüche 5 oder 6, **dadurch gekennzeichnet, dass** die Vorrichtung (2) eine Grundplatte (4) mit einer Anzahl von Stecksockeln (20) aufweist, in die die Primärspulen und/oder die Sekundärspulen der Spulenanordnungen (6) einsteckbar sind.

8. Vorrichtung (2) nach Anspruch 7, **dadurch gekennzeichnet, dass** mit der Grundplatte (4) ein Mikroprozessor (14), die Spannungsversorgung (16), der Regelkreis (18) und/oder einer oder mehrere Operationsverstärker (10) verbunden sind.

9. Vorrichtung (2) nach einem der vorhergehenden Ansprüche, **dadurch gekennzeichnet, dass** der Wandler, der Operationsverstärker (10) zur Verstärkung der Primär-Sinusspannung, der Regelkreis (18), die Versorgungsspannung für die Prozessorumgebung und die Operationsverstärker (10) der Sekundärspannungen und/oder die Versorgungsspannung für die Daten-Schnittstellen galvanisch getrennt ausgebildet sind.

10. Vorrichtung (2) nach einem der vorhergehenden Ansprüche, **dadurch gekennzeichnet, dass** der Mikroprozessor (14) und die Prozessorperipherie auf einer eigenen Prozessorplatine angeordnet sind, die mit der Grundplatte (4) verbindbar ist, und wahlweise zusätzlich das Schalt-Netzteil mit der Prozessorplatine verbunden ist.

11. Vorrichtung (2) nach einem der vorhergehenden Ansprüche, **dadurch gekennzeichnet, dass** die Vorrichtung (2) mit einem Gehäuse mit Schirmfunktion gegen Störstrahlung und Schutzfunktion vor elektromagnetischen Störungen versehen ist.

12. Vorrichtung (2) nach einem der vorhergehenden Ansprüche, **dadurch gekennzeichnet, dass** die Vorrichtung zumindest eine optische Anzeige aufweist.
